Europäisches Patentamt

European Patent Office

Office européen des brevets

(11) Veröffentlichungsnummer: **0 260 468**

**A1**

## (12) EUROPÄISCHE PATENTANMELDUNG

(21) Anmeldenummer: **87112064.8**

(22) Anmeldetag: **20.08.87**

(51) Int. Cl.⁴: **B21K 27/06** , B23D 23/00

(30) Priorität: **17.09.86 CH 3721/86**

(43) Veröffentlichungstag der Anmeldung:
**23.03.88 Patentblatt 88/12**

(84) Benannte Vertragsstaaten:
**AT BE DE FR GB IT NL SE**

(71) Anmelder: **Hatebur Umformmaschinen AG**
**General Guisan-Strasse 21**
**CH-4153 Reinach(CH)**

(72) Erfinder: **Zanzerl, Hermann**
**Hostet 112**
**CH-4305 Olsberg(CH)**
Erfinder: **Hug, Peter**
**Thiersteinerallee 68**
**CH-4053 Basel(CH)**

(74) Vertreter: **Eschmann, Heinz et al**
**A. Braun, Braun, Héritier, Eschmann AG**
**Patentanwälte Holbeinstrasse 36-38**
**CH-4051 Basel(CH)**

(54) **Vorrichtung zum Abscheren von Stangenmaterial.**

(57) Es wird eine Hochgeschwindigkeits-Abschervorrichtung vorgeschlagen, mit einem hin-und herbeweglich geführten scherwerkzeugbestückten Scherschlitten (15), mit dem Abschnitte eines Stangenmaterials abgeschert werden. Ein Schlagantriebselement (6,7) wird von einem Schwenkhebelantrieb (1 bis 5) in Richtung der Längsmittelachse (L) des Scherschlittens (15) hin-und herbewegt und trifft nach dem Durchlaufen eines vorgegebenen Beschleunigungsabstandes (a) auf den Scherschlitten (15) auf, womit der Abschervorgang eingeleitet wird. Zwischen dem Schwenkhebelantrieb (1 bis 5) und dem Schlagantriebselement (6, 7) ist ein Massenkraftübertragungsorgan (9) vorgesehen, welches eine elastische Kopplung zwischen diesen beiden Vorrichtungsteilen ausbildet. Während der Schwenkhebelantrieb (1 bis 5) seinen zwangsgesteuerten Antriebsweg über den gesamten Arbeitszyklus unverzögert fortsetzen kann, gibt das Massenkraftübertragungsorgan (9) zu Beginn der Scherarbeit nach und erlaubt dadurch eine gewisse Verzögerung des Schlagantriebselements, welche im weiteren Verlauf des Abscherens oder am Ende des Abschervorgangs wieder ausgeglichen wird.

Während des Abscherens ist somit der Schwenkhebelantrieb (1 bis 5) in gewisser Weise von der bereits stark beschleunigten Masse des Schlagantriebselements (6,7) entkoppelt, so daß letzteres als eine sich "frei" bewegende Masse die Scherarbeit ausführt.

FIG. 1

## Vorrichtung zum Abscheren von Stangenmaterial

Die Erfindung bezieht sich auf eine Vorrichtung nach dem Oberbegriff des Patentanspruchs 1.

Bei einer aus der DE-PS 25 26 151 bekannten Vorrichtung dieser Art besitzt das Schlagantriebselement einen Schlagkopf am freien Ende eines einen Winkelweg durchschwenkenden Schlaghebels, der vom Schwenkhebelantrieb betätigt wird. Der bei dieser bekannten Vorrichtung verwendete Scherschlitten wird in seiner Einzugsposition über auf Führungsbolzen aufgesetzte Schraubenfedern gegen die Schlagrichtung vorgespannt gehalten. Die Verlagerung des Scherschlittens aus seiner Einzugsposition erfolgt über ein wuchtiges Aufschlagen des Schlagkopfs auf das vom Schermesser abgewandte Ende, wodurch der gesamte Scherschlitten für die Einleitung des Schervorgangs stark beschleunigt wird. Bei dieser bekannten Vorrichtung ist es insbesondere von Nachteil, daß der gesamte kraftschlüssig arbeitende Antrieb relativ schwer und damit kostenaufwendig gestaltet werden muß, da er die geforderte hohe Scheranfangsgeschwindigkeit gleichsam auf einen starken Stoßimpuls konzentriert aufzubringen hat. Aber nicht nur die antriebsseitigen Massenverhältnisse führen zu Funktionsnachteilen, sondern auch der aus Festigkeitsgründen relativ schwere, aus einer Baueinheit bestehende Scherschlitten erfordert zu seiner Verlagerung einen hohen Kraftaufwand.

Es sind weitere Abschervorrichtungen bekannt (z.B. DE-OS 34 32 330 und DE-PS 27 11 675), bei denen ein Scherantriebskopf nach Art eines Hammers auf den Scherschlitten schlägt und diesen damit antreibt. Dieses Prinzip des Schlagantriebes, bei dem auf den Scherschlitten erst nach Durchlaufen einer gewissen Beschleunigungsstrecke der Vorschubkraftimpuls ausgeübt wird, ist für das Erreichen der von modernen Hochgeschwindigkeitsscheren geforderten Leistungsfähigkeit bei gleichzeitiger Erzielung hochpräziser Abschnitte an sich zu befürworten, jedoch sollten vor allem die vorerwähnten Nachteile eliminiert werden können.

Die Aufgabe der Erfindung besteht daher in der Schaffung einer Vorrichtung der geschilderten Art, bei der insbesondere der Antriebsbereich so ausgestaltet werden soll, daß mit einem vergleichsweise kleinen Antrieb, der nur ein relativ niedriges Antriebsmoment aufbringt, eine zufriedenstellend hohe Scherkraft erzielt werden kann. Ferner soll die zu schaffende Vorrichtung in weitgehender Leichtbauweise, insbesondere ohne schwere bewegte Massen im Scherbereich realisierbar sein.

Die erfindungsgemäße Lösung ist vor allem im Patentanspruch 1 im einzelnen gekennzeichnet. Weitere Merkmale ergeben sich aus den abhängigen Ansprüchen.

Durch die nach der Erfindung im Vordergrund stehende Kopplung zwischen dem im einzelnen gekennzeichneten Gleitstück und dem aus dem Massenkörper und dem Schlagschlitten gebildeten Schlagantriebselement über das das Gleitstück gegen die Schlagrichtung nachgiebig vorspannende Massenkraftübertragungsorgan wird eine Art elastisches Verbindungsglied zwischen dem Schwenkhebelantrieb und dem Schlagantriebselement geschaffen. Dadurch wird es möglich, daß das Abscheren, nicht wie bei sämtlichen bekannten Vorrichtungen dieser Gattung, allein durch die vom Antrieb unmittelbar bereitgestellte Antriebskraft eingeleitet und ausgeführt wird, sondern in entscheidendem Umfang durch die in den Schervorgang übertragene kinetische Energie aus dem vor Beginn des Abscherens beschleunigten Schlagantriebselement. Zur prinzipiellen Unterscheidung zwischen dem erfindungsgemäßen Vorgehen und dem, wie es bei bekannten Vorrichtungen dieser Gattung üblich war, könnte man sagen, daß bei der Erfindung nicht der Schwenkhebelantrieb das Abscheren bewirkt, sondern daß dieses von der sich "frei" bewegenden Masse des Schlagantriebselements ausgeführt wird.

Das geschilderte Massenkraftübertragungsorgan erzeugt während der Anlaufphase des Schlagantriebselements, bevor der Schlagschlitten auf den Scherschlitten auftrifft, eine im wesentlichen feste Kopplung zwischen dem Gleitstück und dem Massenkörper des Schlagantriebselements. In dem Moment, in dem der Schlagschlitten auf den Scherschlitten auftrifft und dieser seine Scherarbeit beginnt, tritt eine Verzögerung des Schlagantriebselements infolge der Belastungsrückwirkung über den Scherschlitten auf. Der Schwenkhebelantrieb setzt aber, da er nockengesteuert ist, seine Schwenkbewegung unverzögert fort und belastet damit das Massenkraftübertragungsorgan, welches entsprechend seiner Vorspannung nachgibt. Im Zuge des nachfolgenden Geschwindigkeitsausgleichs zwischen der Winkelverlagerung des Schwenkhebelantriebs und der verzögerten Linearbewegung des Schlagantriebselements erfolgt eine "Aufladung" des Schlagantriebselements mit der über das Massenkraftübertragungsorgan abgegebenen Energie, die damit für den Abschervorgang zur Verfügung steht und in die Scherarbeit einfließt. Das Schlagantriebselement kann man somit mit einem Schwungrad vergleichen,

welches zunächst von einem relativ klein dimensionierten Antrieb hochgedreht wird und dann, vom Antrieb entkoppelt, seine Rotationsenergie in einem kurzen Moment freisetzt bzw. überträgt.

Es ist nun einsehbar, daß die erfindungsgemäße Vorrichtung mit einem relativ kleindimensionierten Schwenkhebelantrieb auskommt und dabei eine höhere Schergeschwindigkeit gestattet, da ein kleindimensionierter leichter Antrieb auch - schneller angetrieben werden kann.

Das erfindungsgemäß vorgesehene Massenkraftübertragungsorgan zwischen dem Schlagantriebselement und dem Schwenkhebelantrieb kann mechanisch, pneumatisch oder hydraulisch realisiert werden. Ein Ausführungsbeispiel zeigt eine mechanische Ausführung, bei der das mit dem Schwenkhebelantrieb verbundene Gleitstück über eine Stange, einen Teller und ein Kraftübertragungsorgan, das sich einerseits am Teller und andererseits an der gegenüberliegenden Fläche des Massenkörpers abstützt, gebildet wird. Es wäre auch möglich, als Massenkraftübertragungsorgan einen hydraulischen Blasenspeicher, einen Pneumatikzylinder oder eine Feder zu verwenden.

Da das Massenkraftübertragungsorgan eine relativ hohe Vorspannkraft besitzt, wird das bei nachgebendem Kraftübertragungsorgan von seiner Anlage am Massenkörper kurzzeitig abgehobene Gleitstück anschließend wieder mit großer Wucht an seine Anlagefläche zurückgezogen. Um bei dieser Reversierbewegung keine zu hohen Belastungsspitzen im Bereich der Anlagefläche auftreten zu lassen, kann ein in Richtung der Vorbelastungskraft wirkender Dämpfer vorgesehen sein.

Damit der Scherschlitten eine minimal geringe Masse besitzt, ist er gemäß einer Ausführungsform der Erfindung insgesamt kurz und in Längsrichtung schlank ausgeführt. Damit ein derart schlank und leicht gebauter Scherschlitten während des Abschervorgangs sicher entlang eines feststehenden Schermessers geführt werden kann, sind vorteilhafterweise direkt neben der Einzugs-und Ausstoßposition, an dem das feststehende Schermesser tragenden Messerklotz, Führungsschienen angebracht, welche den Scherschlitten an beiden Längsseitenrändern gleitend führen. Mit diesen konstruktiv vorteilhaften Maßnahmen wird eine insgesamt bessere Scherqualität erzielt und ein Ausweichen oder Verbiegen des schlank ausgeführten Scherschlittens ausgeschlossen. Die insgesamt kleine und auch in Bewegungsrichtung kurze Ausführung des Scherschlittens ergibt auch einen kürzeren Stauchweg, wodurch der Scherenenergieverlust verringert wird.

Ferner können die Führungen am Messerklotz vorteilhafterweise so ausgebildet sein, daß sie bei einem Wechsel der Schermesser nicht abgenommen zu werden brauchen, sondern daß der Scherschlitten in Scherrichtung lediglich aus dem Führungsbereich so weit herauszuschieben ist, daß ein Austauschen der Schermesser erfolgen kann.

Als ergänzende Sicherheitseinrichtung könnte die zwischen dem Schwenkhebelantrieb und dem Gleitstück des Schlagantriebselements vorgesehene Kopplung in Form eines Reißbolzens ausgeführt werden, damit diese Kraftübertragungskopplung gegen Überlast gesichert ist.

Nachstehend werden Ausführungsbeispiele der Erfindung anhand von Zeichnungen näher erläutert. Es zeigen:

Fig. 1 eine schematische Teilschnittansicht bei einer Schnittführung in Längsrichtung durch eine Vorrichtung nach den Merkmalen der Erfindung in einer ersten Endstellung zu Beginn eines Scherzyklus,

Fig. 2 eine schematische Darstellung ähnlich der in Fig. 1, bei welcher die Vorrichtung in einer zweiten Endstellung am Ende eines Abschervorgangs dargestellt ist,

Fig. 3 eine ähnlich schematische Darstellung wie die nach den Fig. 1 und 2 zur Veranschaulichung der Wirkungsweise eines Massenkraftübertragungsorgans der Vorrichtung in einer unmittelbar den Scherbeginn wiedergebenden Position der Vorrichtungsteile,

Fig. 4 eine schematische Darstellung einer abgewandelten Ausführungsform der Erfindung.

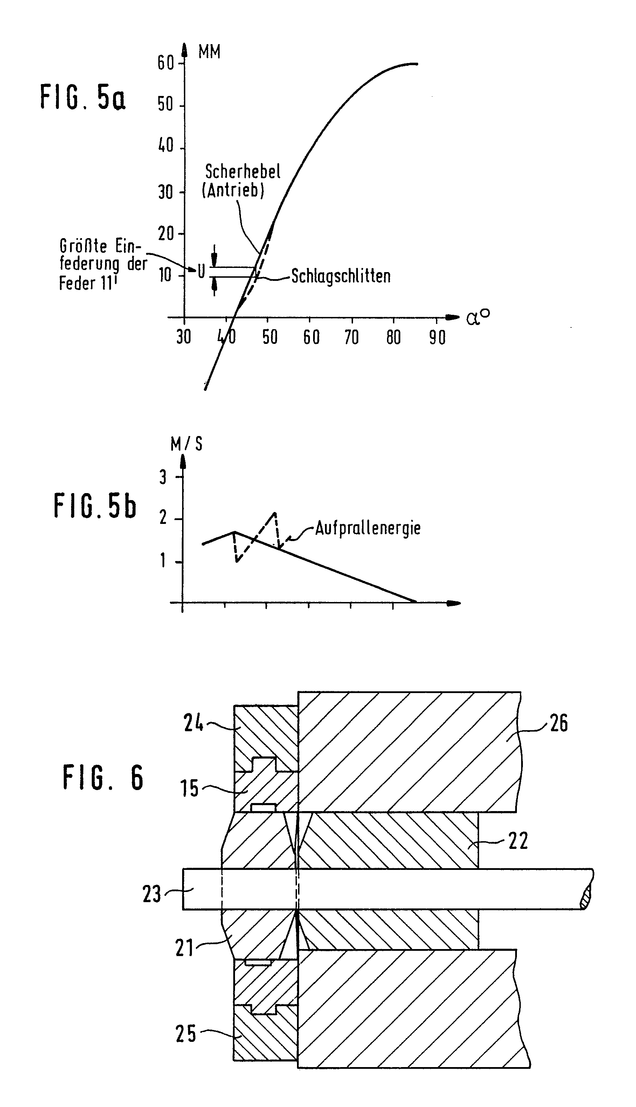

Fig. 5a und 5b je eine graphische Darstellung zur Veranschaulichung von Bewegungsabweichungen, die zwischen einem Schlagantriebselement und einem Schwenkhebelantrieb bei der Vorrichtung nach den Merkmalen der Erfindung während eines bestimmten Abschnitts des Scherzyklus auftreten, wobei in Fig. 5a auf der Ordinate der Weg des Schlagantriebselements und auf der Abszisse der Drehwinkel des Schwenkhebelantriebs eingetragen sind und in Fig. 5b eine entsprechende Beschleunigungs-und Verzögerungskurve über die auf der Ordinate aufgetragenen Geschwindigkeitsänderungen, bei gleicher Abszisseneinteilung wie in Fig. 5a, zur Veranschaulichung des Verlaufs der Aufprallenergie und

Fig. 6 einen Querschnitt bei einer Schnittführung entlang der Linie IV-IV in Fig. 3.

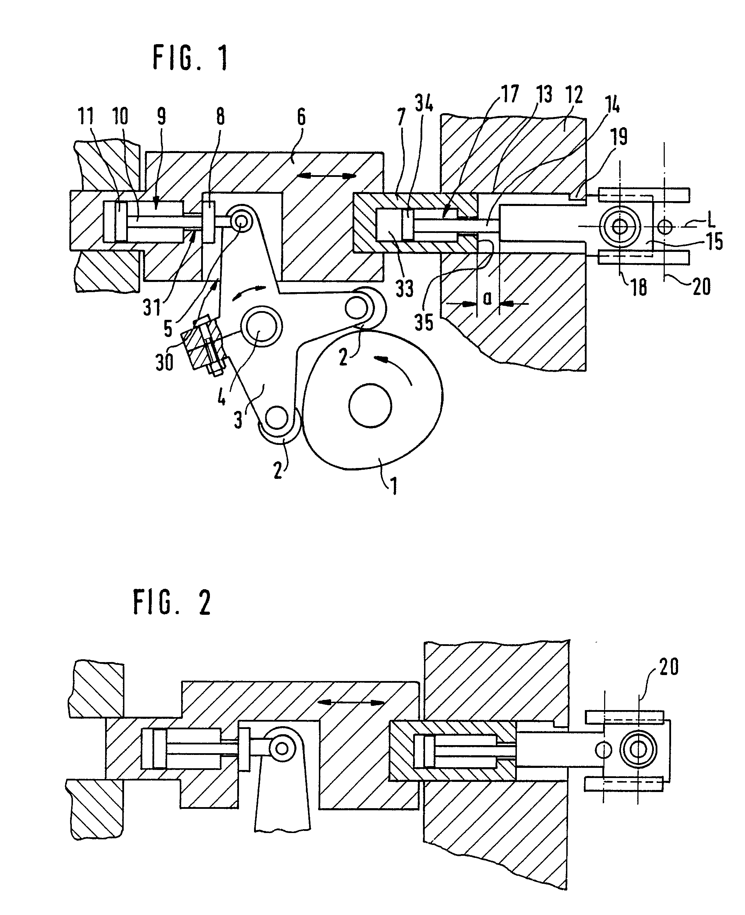

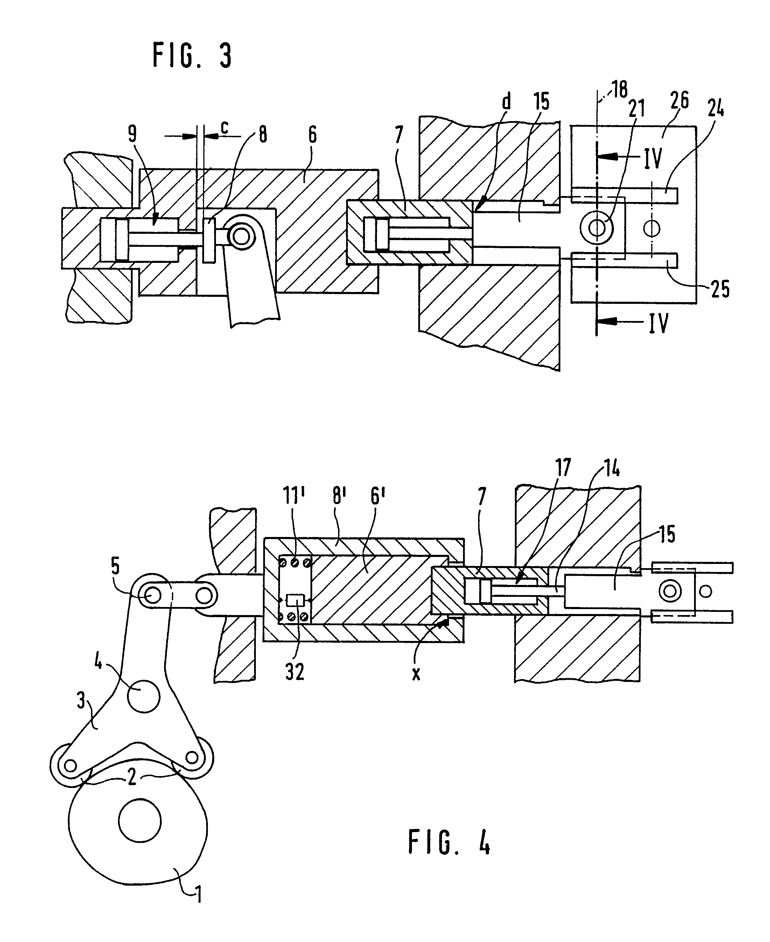

Bei der in Fig. 1 bis 3 gezeigten Ausführungsform der Abschervorrichtung ist ein Scherschlitten 15 auf einem Messerklotz 26 (Fig. 3) zwischen zwei an den Längsseitenrändern des Scherschlittens 15 anliegenden Führungsschienen 24, 25 gleitend hin-und herbeweglich gelagert. Der Scherschlitten 15 enthält ein geschlossenes Messer 21, welches bei der Hin-und Herbewegung des Schlittens zwischen einer Einzugsposition 18, in der das geschlossene Messer 21 ein Stangenmaterial aufnehmen kann, und einer Ausstoß-und Übergabeposition 20 verschiebbar ist, in welcher die vom Stangenmaterial abgetrennten Stangenabschnitte zur ersten Bearbeitungsstufe abgegeben werden.

Aus der Schnittdarstellung gemäß Fig. 6 ist ersichtlich, wie der Scherschlitten 15 über die Führungsschienen 24, 25, welche auf dem Messerklotz 26 aufgeschraubt sind, geführt wird. Koaxial zur Längsmittelachse des Messers 21 ist in der Einzugsposition 18 ein ortsfestes Messer 22 in einer entsprechenden Aus nehmung des Messerklotzes 26 geführt, welches mit seiner kreisringförmigen Schneidstirnfläche an die entsprechendie Gegenfläche des Messers 21 angrenzt. Zwischen diesen beiden Flächen erfolgt die Abtrennung der in Fig. 6 schematisch angedeuteten Rohmaterialstange 23. Es ist insbesondere aus den Fig. 3 und 6 ersichtlich, daß der Scherschlitten 15 gerade so groß ausgeführt ist, daß er das geschlossene Messer 21 funktionssicher halten und führen kann. Die hin-und herzubewegende Masse des Scherschlittens 15 ist damit optimal klein gehalten, und die demgegenüber stabil ausgelegten Führungsschienen 24 und 25, die zudem noch dicht neben der Einzugsposition 18 angeordnet sind, da in dieser Position die größte Belastung auf den Scherschlitten 15 ausgeübt wird, sorgen für eine sichere Abstützung des Scherschlittens gegen Verbiegung und Ausknickung. Gemäß Fig. 1 wird der Scherschlitten 15 bei seiner Rückwärtsverlagerung aus der Ausstoß-und Übergabeposition 20 in seine Einzugsposition 18 durch einen an einem Maschinenkörper 12 angebrachten Anschlag 19 begrenzt. Damit ist die in Fig. 6 gezeigte fluchtende Übereinstimmung der beiden Messer 21 und 22 zu Beginn eines jeden Abschnittzyklus sichergestellt.

Der Scherschlitten 15 wird an seinem der Messerlagerung abgewandten Endabschnitt durch einen Schlagschlitten 7 beaufschlagt, der seinerseits über einen Schwenkhebelantrieb 1 bis 5 hin-und herbewegt wird. Der Schlagschlitten 7 besitzt eine Ausnehmung 33, und seine Schlagschlittenstirnseite 35 weist eine konzentrische Öffnung auf, durch welche eine Verbindungsstange 14 aus dem Inneren des Schlagschlittens 7 hinausragt und mit dem hinausragenden Ende am Scherschlitten 15 befestigt ist.

Die Verbindungsstange 14 ist innerhalb des Schlagschlittens 7 endseitig verschiebbar geführt und wird durch einen Teller 34 begrenzt, der als ringförmige Abstützung für ein elastisches Organ 17 dient. Dieses Organ 17 belastet den Teller 34 gegen die Schlagrichtung des Schlittens vor, wodurch in der in Fig. 1 gezeigten Position am Beginn eines Abscherzyklus die Verbindungsstange 14 den Scherschlitten 15 gegen seinen Anschlag 19 andrückt. Der Schlagschlitten 7 ist in einer im Maschinenkörper 12 vorgesehenen Führung 13 in Richtung der in Fig. 1 dargestellten Längsmittelachse L gleitend geführt.

Der Schlagschlitten 7 ist Teil eines Schlagantriebelements, zu dem im wesentlichen noch ein Massenkörper 6 gehört, welcher an dem vom Scherschlitten 15 abgewandten Ende des Schlagschlittens 7 befestigt ist. Der Massenkörper 6 ist in seinem Inneren mit einer Aussparung 30 versehen, welche in etwa so tief ist, daß im Umgebungsbereich des Massenschwerpunktes des Körpers die für die Verlagerung des Schlagantriebselements erforderlichen Bauteile untergebracht werden können. So befindet sich in der Aussparung 30 in etwa auf der Längsmittelachse L ein Gleitstück 8, das in Verlagerungsrichtung des Schlagschlittens 7 beweglich geführt ist. Einerseits ist an dem Gleitstück 8 über einen Schwenkzapfen 5 das freie Ende eines um eine Welle 4 auslenkbaren Scherhebels 3 des Schwenkhebelantriebs angelenkt. Der Scherhebel 3 trägt auf seinen gabelförmigen Antriebsenden zwei Kurvenrollen 2, welche auf einer Doppelkurve 1 aufliegen und auf dieser abrollen. Bei einer Drehung der Doppelkurve 1 in Richtung des in den Fig. 1 und 2 eingezeichneten Pfeils verlagert sich der Scherhebel 3 bzw. der Zapfen 5 innerhalb des ebenfalls eingezeichneten Winkelbereichs. Andererseits ist am Gleitstück 8 ein Massenkraftübertragungsorgan 9 befestigt. Dieses besitzt eine Stange 10, die durch eine Öffnung 31 im Massenkörper 6 gegen die Schlagrichtung weisend absteht und an ihrem abstehenden Ende einen Teller 11 trägt. Zwischen diesem Teller 11 und der gegenüberliegenden Fläche des Massenkörpers 6 ist ein Kraftübertragungsorgan mit hoher Vorspannkraft eingefügt, welches über die Stange 10 das Gleitstück 8 gegen die in Fig. 1 deutlich sichtbare Anschlagfläche in der Aussparung 30 andrückt.

Zu Beginn eines Abscherzyklus befinden sich die Vorrichtungselemente in einer Stellung gemäß Fig. 1, wobei in der Einzugsposition 18 eine Rohmaterialstange 23 (Fig. 6) in die Öffnungen der geschlossenen Messer 21 und 22 eingeschoben ist. Zwischen dem Ende des Scherschlittens 15 und der gegenüberliegenden Schlagschlittenstirnseite 35 besteht der in Fig. 1 gezeigte Abstand a, welchen der Schlagschlitten 7 durchlaufen muß, bis er auf den Scherschlitten 15 auftrifft. Dieser Abstand ist zur anfänglichen Beschleunigung des Schlagschlittens 7 auf eine hohe Scheranfangsgeschwindigkeit erforderlich. Solange das Schlagantriebselement, im wesentlichen bestehend aus dem Schlagschlitten 7 und dem Massenkörper 6, den Abstand a durchläuft, befindet sich das Gleitstück 8 in seiner in Fig. 1 gezeigten Lage, in der es fest an den Massenkörper 6 angedrückt gehalten wird. Im Augenblick des Auftreffens der Schlagschlittenstirnseite 35 auf den Scherschlitten 15, wie in Fig. 3 gezeigt, federt das aus der Stange 10, dem Teller 11 und dem Kraftübertragungsorgan gebildete vorspannende Massenkraftübertragungsorgan 9 etwas ein, und dabei wird das Gleit stück 8 von seiner Anschlagfläche etwa um den in Fig.3 eingezeichneten Abstand c abgehoben. Dieses Abheben kommt dadurch zustande, daß der Schwenkhebelantrieb 1 bis 5 seine zwangsgesteuerte Antriebsbewegung unverzögert weiterführt, während das Schlagantriebselement zu Beginn der Scherarbeit des Scherschlittens 15 verzögert wird. Im weiteren Verlauf des Abscherens, der bis zum Ende des Schervorgangs reichen kann, wird die eingeleitete Verzögerung des Schlagantriebselements gegen-über dem Schwenkhebelantrieb durch das Massenkraftübertragungsorgan 9 wieder ausgeglichen, so daß das Gleitstück 8 wieder an seine Anschlagfläche innerhalb der Aussparung 30 angedrückt wird.

Das Massenkraftübertragungsorgan 9 kann damit als ein elastisches Verbindungsglied zwischen dem Schwenkhebelantrieb und dem Schlagantriebselement betrachtet werden, das gestattet, daß die bis zum Beginn des Abscherens stark beschleunigte Masse längstens für die Dauer des Abschervorgangs gleichsam von ihrem Antrieb entkoppelt wird und sich damit "frei" bewegen kann. Die eigentliche Scherarbeit leistet, ähnlich wie bei einem hochgedrehten Schwungrad, das bis zum Auftreffen des Schlagschlittens auf den Scherschlitten beschleunigte Schlagantriebselement.

In den Fig. 5a und 5b ist die gegenseitige Bewegungsabweichung zwischen dem Scherhebel 3 und dem Schlagschlitten 7 graphisch dargestellt. Der gestrichelte Kurvenabschnitt in Fig. 5a zeigt die Verzögerung des Schlagschlittens 7 gegenüber dem Scherhebel 3 vom Beginn des Abscherens bis zum Wiederangleichen beider Geschwindigkeiten in diesem Arbeitsabschnitt. Das Diagramm gemäß Fig. 5b zeigt die Abweichung der Beschleunigungs- bzw. Verzögerungskurve zwischen dem Schwenkhebelantrieb (ausgezogene Linie) und der Schlag- und Scherschlittenmasse ( gepunktete Linie). Diese Masse vollzieht eine gegenüber der Beschleunigungs-bzw. Verzögerungsphase des Schwenkhebelantriebs starke Positiv-Negativ-Abweichung.

In Fig. 4 ist eine abgewandelte Ausführungsform der Vorrichtung nach den Merkmalen der Erfindung schematisch dargestellt. Der Massenkörper 6' ist bei dieser Ausführungsform im Inneren eines gehäuseförmigen Gleitstücks 8' längsverschiebbar gelagert und trägt an einem Ende den Schlagschlitten 7, der, wie bei der vorstehend beschriebenen Ausführungsform, über die Verbindungsstange 14 und das elastische Organ 17 mit dem Scherschlitten 15 verbunden ist. Der Schwenkhebelantrieb 1 bis 5 ist an die vom Schlagschlitten 7 abgewandt liegende Stirnseite des gehäuseförmigen Gleitstücks 8' angekoppelt. Das Kraftübertragungsorgan 11' ist im Inneren des Gleitstücks 8' in der dargestellten Form untergebracht. Beim Auftreffen des Schlagschlittens 7 auf den Scherschlitten 15 federt der Massenkörper 6' gegen die Vorbelastung dieses Organs 11' ein, und die den Massenkörper vor dem Einfedern in Schlagrichtung begrenzende Abstützfläche X wird um den in Fig. 3 gezeigten Abstand c freigegeben. Damit bei dem nachfolgenden Rückfedern des Massenkörpers 6' gegen diese Abstützfläche X keine allzugroßen Spitzenbelastungen auftreten können, ist zwischen dem Massenkörper 6' und dem Gleitstück 8' ein in Fig. 4 schematisch gezeigter Dämpfer 32 vorgesehen.

## Ansprüche

1. Vorrichtung zum Abscheren von Stangenmaterial, insbesondere an einer Mehrstufen-Quertransportpresse mit einem zwischen einer Einzugsposition (18) zur Aufnahme des Stangenmaterials und einer Ausstoß-und Übergabeposition (20) für abgetrennte Stangenabschnitte hin-und herbeweglich geführten scherwerkzeugbestückten Scherschlitten (15), der über ein elastisches Organ (17) in Richtung seiner Einzugsposition (18) vorgespannt ist, einem auf diesen Scherschlitten (15) gegen die Vorspannrichtung einwirkendes Schlagantriebselement (6,7) und mit einem dieses Element auf den in der Einzugsposition befindlichen Scherschlitten nach Durchlaufen eines vorgegebenen Beschleunigungsabstandes (a) schlagenden kurvengesteuerten Schwenkhebelantrieb (1 bis 5), dadurch **gekennzeichnet,** daß das Schlagantriebselement einen im Maschinenkörper (12) der Presse in Richtung der Längsmittelachse (L) des Scherschlittens (15) verlagerbar geführten Schlagschlitten (7) und einen Massenkörper (6) aufweist, der mit dem Schlagschlitten (7) an seinem vom Scherschlitten (15) abgewandten Ende in Verbindung steht, daß an dem Massenkörper (6) ein in der Verlagerungsrichtung des Scherschlittens (15) hin-und herverschiebbares, mit dem Schwenkhebelantrieb (1 bis 5) gekoppeltes Gleitstück (8) gelagert ist und daß zwischen diesem Gleitstück (8) und dem aus dem Massenkörper (6) und dem Schlagschlitten (7) gebildeten Schlagantriebselement ein das Gleitstück (8) gegen die Schlagrichtung nachgiebig vorspannendes Massenkraftübertragungsorgan (9) vorgesehen ist.

2. Vorrichtung nach Anspruch 1, dadurch **gekennzeichnet,** daß der Massenkörper (6) eine zum Schwenkhebelantrieb (1 bis 5) hin sich öffnende Aussparung (30) aufweist, daß in dieser Aussparung das Gleitstück (8), in etwa fluchtend mit der durch den Scherschlitten (15) und den Schlagschlitten (7) verlaufende gemeinsame Längsmittelachse (L), begrenzt verschiebbar geführt ist, daß das Massenkraftübertragungsogan (9) aus einer an dem Gleitstück (8) befestigten, gegen die Schlagrichtung von diesem abstehenden, mit radialem Spiel durch eine im Massenkörper (6) vorgesehene Öffnung (31) hindurchgeführte Stange (10), einem im Abstand von dem Massenkörper (6) auf der Stange befestigten Teller (11) und einem zwischen dem Teller und der diesem gegenüberliegenden Fläche des Massenkörpers (6) eingefügten Kraftübertragungsorgan gebildet wird.

3. Vorrichtung nach Anspruch 1, dadurch **gekennzeichnet,** daß das Massenkraftübertragungsorgan (9) als ein zwischen dem Schwenkhebelantrieb (1 bis 5) bzw. dem Gleitstück (8) und dem Massenkörper (6) wirksamer hydraulischer Blasenspeicher, Pneumatikzylinder oder als Feder ausgeführt ist.

4. Vorrichtung nach Anspruch 2 oder 3, dadurch **gekennzeichnet,** daß zwischen dem Massenkörper (6′) und dem Gleitstück (8′) ein Dämpfer (32) zur Abdämpfung der durch die Vorbelastung des Kraftübertragungsorgans (11′) bewirkten Rückverlagerung des Gleitstücks (8′) gegen seine entsprechende Abstützfläche (X) vorgesehen ist (Fig. 4).

5. Vorrichtung nach einem der vorangehenden Ansprüche 1 bis 4, dadurch **gekennzeichnet,** daß das den Scherschlitten (15) in Richtung seiner Einzugsposition (18) vorspannende elastische Organ (17) über einen Teller (34) auf eine durch die Schlagschlittenstirnseite (35) hindurchgeführte und am Scherschlitten (15) befestigte Verbindungsstange (14) einwirkt, derart, daß der Scherschlitten (15) in seiner Einzugsposition (18) gegen einen am Maschinenkörper (12) angebrachten Anschlag (19) gedrängt wird.

6. Vorrichtung nach einem der vorangehenden Ansprüche 1 bis 5 mit einem am Scherschlitten (15) vorgesehenen geschlossenen Schermesser (21), das relativ zu einem ortsfesten, in einem Messerklotz (26) gehaltenen Messer (22) verschiebbar ist, dadurch **gekennzeichnet,** daß der Scherschlitten (15) zur Minimierung seiner zu bewegenden Masse insgesamt kurz und in Längsrichtung schlank ausgeführt ist und an seinen beiden längslaufenden Seitenrandabschnitten in beidseits und neben den Einzugs-und Ausstoßpositionen (18 bzw. 20) am Messerblock (26) angebrachten Führungsschienen (24, 25) geführt ist.

FIG. 1

FIG. 2

0 260 468

FIG. 3

FIG. 4

**FIG. 5a**

Größte Einfederung der
Feder 11'

Scherhebel
(Antrieb)

Schlagschlitten

**FIG. 5b**

Aufprallenergie

**FIG. 6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 886 829  (CRIBLEZ) <br> * Insgesamt * <br> --- | 1-6 | B 21 K 27/06 <br> B 23 D 23/00 |
| D,A | DE-C-2 711 675  (K.K. KOMATSU SEISAKUSHO) <br> * Insgesamt * <br> --- | 1,4 | |
| D,A | DE-C-2 526 151  (HATEBUR) <br> * Spalte 3, Zeile 52 - Spalte 4, Zeile 8; Figuren 1,2 * <br> ----- | 5 | |

RECHERCHIERTE SACHGEBIETE (Int. Cl.4)

B 21 K
B 23 D

Der vorliegende Recherchenbericht wurde für alle Patentansprüche erstellt

| Recherchenort | Abschlußdatum der Recherche | Prüfer |
|---|---|---|
| DEN HAAG | 27-11-1987 | THE K.H. |

EPO FORM 1503 03.82 (P0403)